# EUROPEAN PATENT APPLICATION

(11) **EP 0 689 303 A1**
(43) Date of publication of application: **27.12.1995**
(21) Application number: 94201485.3
(22) Date of filing: 25.05.1994
(51) Int. Cl.: H04B 7/26

(54) **TDMA mobile communication system with simultaneous communication between base and mobiles at a first frequency and between mobiles at a second one**

(71) Applicant: ALCATEL BELL-SDT S.A., B-6100 Charleroi (BE)
(72) Inventor: Pequet, Eric Marc Leon Marie, B-6120 Ham-sur-Heure (BE)

(57) **Abstract**

A communication system is described which includes a base station (BS) and a plurality of mobile stations (M1,M2,M3,M4). The base station (BS) is adapted to transmit, in an i-th time slot of consecutive frames of time slots of a TDMA protocol, data to a first mobile station (M1), this data being modulated on a first carrier wave having a first frequency (FDL). On the other hand, the first mobile station (M1) as well as a second mobile station (M2) both are adapted to exchange, in a k-th time slot of the consecutive frames of time slots of the TDMA protocol, data modulated on a second carrier wave having a second frequency (FDM), the k-th time slot being different from the i-th time slot.

## Description

The present invention relates to a communication system including a base station and a plurality of mobile stations, said base station being adapted to transmit, in an i-th time slot of consecutive frames of time slots of a TDMA protocol, data to a first one of said mobile stations, said data being modulated on a first carrier wave having a first frequency.

Such a communication system is known in the art, e.g. from the book 'Mobile Cellular Telecommunications Systems', by W. Lee, published by McGraw-Hill Book Cy, 1989, chapter 14. Therein, the communication system is a cellular communication system, and the base station is referred to as a 'cell site'. When the first mobile station wants to receive data from or transmit data to the base station, the timing of the TDMA protocol is first communicated by the base station to this first mobile station, i.e. the operation of the latter station is synchronized to the operation of the base station. The first mobile station may then request access to the base station after which a downlink frequency, viz. the frequency of the first carrier wave, and a time slot per frame, viz. the i-th time slot, is allocated to this mobile station for communicating with the base station. An uplink frequency may also be allocated to the first mobile station via which it may then transmit data to the base station.

An object of the present invention is to provide a communication system of the above known type, but wherein mobile stations are able to exchange data with one another without the use of the base station or base station infrastructure whilst the first mobile station is still able to listen for data being transmitted by the base station.

According to the invention this object is achieved due to the fact that said first mobile station and a second one of said mobile stations both are adapted to exchange, in a k-th time slot of said consecutive frames of time slots of said TDMA protocol, data modulated on a second carrier wave having a second frequency, said k-th time slot being different from said i-th time slot.

In this way, the first and the second mobile station may exchange data in the k-th time slot which is different from the i-th time slot wherein the base station may transmit data to the first mobile station. Thus, whilst the first and second mobile stations exchange data, the first mobile station may still listen for data transmitted by the base station. To be noted that due to the i-th and k-th time slot being different, only one receiver switching between the first frequency used for the i-th time slot and the second frequency used for the k-th time slot is needed.

Another characteristic of the present invention is that said consecutive frames of time slots are arranged in consecutive superframes of frames, that said first mobile station is prevented from exchanging said data modulated on said second carrier frequency in said k-th time slot of a j-th time frame of each of said consecutive superframes, at least one of said k-th time slots being used to broadcast synchronisation information modulated on said second carrier frequency.

In this way, the first mobile station broadcasts the synchronisation information, i.e. information concerning the timing of the TDMA protocol according to which the base station operates, thereby enabling mobile stations receiving this synchronisation information to also synchronize its operation with that of the base station, whereby on the one hand the so-called coverage area of the base station is virtually extended and whereby on the other hand mobile stations which may only communicate directly with the first mobile station and not with the base station are able to synchronize their operation to that of the base station.

Still another characteristic feature of the present invention is that said second mobile station is adapted to receive, in said k-th time slot of said j-th time frame of each of said consecutive superframes, said synchronisation information modulated on said second carrier wave instead of exchanging said data modulated on said second carrier wave.

Thereby, the operation of the second mobile station may become synchronized with that of the base station. To be noted that no collision of data exchanged between the first and second mobile station and synchronisation information transmitted by the first mobile station can occur.

A further characteristic feature of the present invention is that said synchronisation information includes a counter tag, and that said mobile stations are adapted to receive said synchronisation information modulated on said second carrier wave, to increment said counter tag, and to retransmit said thus changed synchronisation information in said k-th time slot of said j-th time frame of a randomly chosen superframe when the value of said counter tag is less than a predetermined threshold value.

In this way, the synchronisation information is propagated outside the coverage area of the base station thereby creating a large virtual coverage area within which mobile stations may become synchronized to the base station. Indeed, when a mobile station receives the synchronisation information it becomes synchronized and in its turn starts broadcasting the synchronisation information after having incremented the counter tag.

This counter tag is included in the synchronisation information in order to avoid too large cumulative delays and too large cumulative transmission errors. Indeed, each retransmission of the synchronisation information gives rise to an additional delay and possible transmission errors. By only retransmitting the latter information when the value of the counter tag is lower than the predetermined threshold value, these delays and errors are prevented from becoming too large.

Yet another characteristic feature of the present invention is that said first mobile station is adapted to retransmit said data received from said second mobile station to said base station, said data thereto being modulated on a third carrier frequency in a l-th time slot of said consecutive frames of time slots, l being a predetermined number different from i.

In this way, the data transmitted by the second mobile station to the first mobile station is relayed or retransmitted by this first mobile station to the base station. Likewise, data may also be relayed from the base station via the first mobile station to the second mobile station. Thus, a mobile station, e.g. the second one, which is out of the coverage area of the base station, may use the base station infrastructure.

The above mentioned and other objects and features of the invention will become more apparent and the invention itself will be best understood by referring to the following description of an embodiment taken in conjunction with the accompanying drawings wherein :
Fig 1 shows a communications system according to the invention; and
Fig 2 shows an arrangement of time slots according to a time division multiple access (TDMA) protocol used in the communication system of Fig 1.

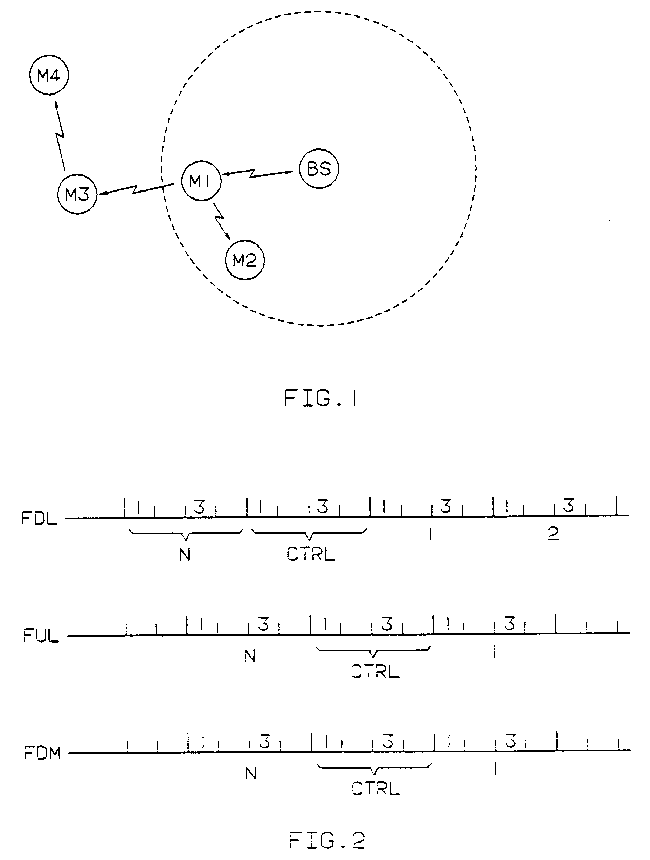

The communication system shown in Fig 1 includes a base station BS and a plurality of mobile stations of which only mobile stations M1, M2, M3 and M4 are shown. The mobile stations M1 and M2 are located within the so-called coverage area of the base station BS which is the area within which mobile stations may correctly receive signals transmitted by the base station BS provided these mobile stations are adapted to receive these signals, or within which mobile stations may transmit signals which may then be correctly received by the base station BS provided the latter signals are adapted to be received by BS. Mobile stations M3 and M4 are outside the coverage area of base station BS. To be noted that the extension of the coverage area depends a.o. on the transmit power as well as on the sensitivity of receipt of the base and the mobile stations, and on the quality of transmission.

The mobile station M1 is able to communicate with the base station BS on respective uplink and downlink channels in time slots according to a time division multiple access (TDMA) protocol - shown in Fig 2 - to which the operation of BS is synchronized. Thereto, the operation of M1 is synchronized to this TDMA protocol by synchronisation information transmitted from the base station BS to the mobile station M1, i.e. data exchanged between mobile station M1 and base station BS is exchanged in time slots which are arranged in frames of 4 time slots each, these frames in their turn being arranged in superframes of N + 1 frames each, each superframe including 1 control frame during which control information may be exchanged, and N data frames for exchanging data.

The frame structure of the uplink channel is translated over 2 time slots with respect to that of the downlink channel whereby, when for instance the first time slot of each frame is allocated, in the downlink as well as in the uplink channel, to the first mobile station for communicating with the base station, the same circuits, e.g. for a local oscillator, may be used for both the transmitter and the receiver part of the first mobile station. Indeed, these circuits in one time slot then operate so as to ensure receipt on the downlink frequency, in the next time slot have time to switch to uplink operation whereby in the following time slot transmission on the uplink frequency is ensured.

When the first mobile station M1 is synchronised to the base station BS and has requested access thereto, the uplink and the downlink channel are allocated to M1 for communication with BS, i.e. a time slot per frame on an uplink frequency FUL and a time slot per frame on a downlink frequency FDL, respectively. Both so allocated channels correspond to a same time slot number per frame, e.g. the first time slot of each frame.

The operation of the second mobile station M2 can in this way not be synchronized to that of the base station BS as M2 is not able to communicate on any of the available uplink of downlink channels with the base station BS. On the other hand, M2 is able to exchange data with mobile station M1 on a direct mode frequency FDM.

However, in order to allow the first mobile station M1 to exchange data with the base station BS whilst monitoring whether the second mobile station M2 transmits data to be received by M1, or to allow M1 to exchange data with M2 whilst monitoring whether BS transmits data to be received by M1, the second mobile station M2 is also synchronized to the TDMA protocol. Thus, even when one communication is being conducted, e.g. between M1 and BS, then data from M2, e.g. concerning an emergency call, may still be received by M1.

Thereto, the first mobile station M1, which is already synchronized, retransmits, in a slightly adapted form as will become clear hereinafter, the synchronisation information received from the base station BS on the direct mode frequency FDM. This synchronisation information includes information indicating the beginning of the time slots, frames and superframes, thus allowing a mobile station receiving this information to synchronize its operation to that of the base station BS, as well as frequency correction information allowing a mobile station to correct the frequency of their uplink and downlink channels, i.e. of their local clock. It further also includes a counter tag initialized by the base station BS and the purpose of which is described later. This synchronisation information is transmitted by the base station BS to the mobile station M1 in the first time slot of one of the control frames of and on the downlink frequency FDL. When M1 receives this synchronisation information, it increments the counter tag by one, thus adapting the form of this information, and retransmits it in the first time slot of the control frame of a randomly chosen superframe of and on the direct mode frequency FDM, the time slot, frame and superframe structure associated to FDM being the same as that associated to FUL. To be noted that no data is exchanged between M1 and M2 in the first time slot of the control frame of any superframe, but only in the first time slots of the other frames.

When the second mobile station M2 receives this synchronization information its operation may become synchronized to that of the base station BS. To be noted that for both M1 and M2 and also for other mobile stations receiving synchronization information, synchronization may, due to transmission or receipt errors, only become effective after this information has been received a number of times.

When the operation of BS, M1 and M2 is thus synchronized, M1 may indeed monitor whether M2 transmits data to be received by M1 whilst M1 is communicating with BS. Indeed, M1 may receive data from the base station BS in the first time slot of and on FDL, and may transmit data to BS in the first time slot of and on FUL, except for the first time slot of the control frame within which it listens for data transmitted by M2, or any other mobile station, on FDM. Vice versa, M1 may off course also listen for data from the base station BS on FDL whilst exchanging data with M2 on FDM.

M2 may then in its turn retransmit the synchronization information in the first time slot of the control frame of a randomly chosen superframe of and on the direct mode frequency FDM, after having incremented the counter tag by one. The latter superframe being randomly chosen as is the superframe in which the synchronization information may again be transmitted by the first mobile station, both instances of the synchronization information, viz. the one transmitted by M1 and the one transmitted by M2, are not likely to occur simultaneously. Thus, a third mobile station, e.g. M3, may correctly receive both instances, and will then synchronize its operation to the TDMA protocol using the synchronisation information having the counter tag with the lowest value. In this way, the synchronisation information with the lowest cumulative delay and the lowest cumulative transmission error is used.

To be noted that when both instances of the synchronisation information would be transmitted in a same time slot, M3 may either still become synchronized when one of both instances is received at a sufficiently higher level than the other instance, whilst otherwise M3 will have to wait for another retransmission of the synchronisation information by either of the mobile stations M1 or M2.

In this way, the operation of each mobile station receiving an instance of the synchronisation information may become synchronized to the operation of the base station BS. Furthermore, such mobile station may then, in the way described above for M2, retransmit this synchronisation information after having adapted the counter tag, provided this counter tag does not exceed a predetermined threshold value. Thus, a fourth mobile station M4 receiving the synchronisation information from M3, may decide not to retransmit this synchronisation information. The latter requirement prevents the synchronisation information from propagating too far from the base station BS which would give rise to too large a cumulative transmission error and too large a cumulative delay. This predetermined threshold value, together with the initial value given to the counter tag by the base station BS, determines the extension of the virtual coverage area within which mobile stations may become synchronized to the TDMA protocol. To be noted that the base station BS may thus adapt the extension of its virtual coverage area dynamically, in function of for instance transmission characteristics, by changing the initial value of the counter tag.

It should be noted that each mobile station regularly transmits the synchronisation information, each time in a superframe which is randomly chosen, and that the rate at which this information is transmitted may be changed in function of the number of received synchronisation messages.

By expanding the coverage area to the virtual coverage area, mobile stations only being able to communicate in direct mode may communicate via the base station BS with other mobile stations communicating via BS. Indeed, M4 may transmit data to M3 which then relays or retransmits this data to M1 which in its turn retransmits this data to the base station BS from which it may be exchanged with any mobile station able to communicate with BS. Vice versa, data received by BS from such a mobile station may then via M1 and M3 be relayed to M4.

While the principles of the invention have been described above in connection with specific apparatus, it is to be clearly understood that this description is made only by way of example and not as a limitation on the scope of the invention.

## Claims

1. Communication system including a base station (BS) and a plurality of mobile stations (M1,M2,M3,M4), said base station (BS) being adapted to transmit, in an i-th time slot of consecutive frames of time slots of a TDMA protocol, data to a first one of said mobile stations (M1), said data being modulated on a first carrier wave having a first frequency (FDL), characterized in that said first mobile station (M1) and a second one of said mobile stations (M2) both are adapted to exchange, in a k-th time slot of said consecutive frames of time slots of said TDMA protocol, data modulated on a second carrier wave having a second frequency (FDM), said k-th time slot being different from said i-th time slot.

2. Communication system according to claim 1, characterized in that said consecutive frames of time slots are arranged in consecutive superframes of frames, that said first mobile station (M1) is prevented from exchanging said data modulated on said second carrier frequency (FDM) in said k-th time slot of a j-th time frame of each of said consecutive superframes, at least one of said k-th time slots being used to broadcast synchronisation information modulated on said second carrier frequency (FDM).

3. Communication system according to claim 2, characterized in that said second mobile station (M2) is adapted to receive, in said k-th time slot of said j-th time frame of each of said consecutive superframes, said synchronisation information modulated on said second carrier wave (FDM) instead of exchanging said data modulated on said second carrier wave (FDM).

4. Communication system according to claim 2, characterized in that said synchronisation information includes a counter tag, and that said mobile stations (M1,M2,M3,M4) are adapted to receive said synchronisation information modulated on said second carrier wave (FDM), to increment said counter tag, and to retransmit said thus changed synchronisation information in said k-th time slot of said j-th time frame of a randomly chosen superframe when the value of said counter tag is less than a predetermined threshold value.

5. Communication system according to claim 1, characterized in that said first mobile station (M1) is adapted to retransmit said data received from said second mobile station (M2) to said base station (BS), said data thereto being modulated on a third carrier frequency in a l-th time slot of said consecutive frames of time slots, l being a predetermined number different from i.

6. Mobile station (M1) used in a communication system according to any of the previous claims, and thereto being adapted to receive data modulated on a first carrier wave (FDL) in each i-th time slot of consecutive frames of time slots of a TDMA protocol, characterized in that said mobile station (M1) is adapted to transmit or to receive data modulated on a second carrier wave (FDM) in a k-th time slot of said consecutive frames of time slots of said TDMA protocol, said k-th time slot being different from said i-th time slot.

7. Mobile station (M1) according to claim 6, characterized in that said frames are arranged in superframes, and that said mobile station (M1) is adapted to broadcast synchronisation information modulated on said second carrier wave (FDM) in said k-th time slot of a j-th time frame of a randomly chosen said superframe.

8. Mobile station (M1) according to claim 6, characterized in that said mobile station is adapted to retransmit data, received on said second carrier wave (FDM), modulated on a third carrier wave in a l-th time slot.

9. Mobile station (M1,M2,M3,M4) used in a communication system according to any of claims 1, 2, 3 or 4, and thereto being adapted to transmit and receive data modulated on a second carrier wave (FDM), characterized in that said mobile station (M1,M2,M3,M4) is adapted to receive synchronisation information and to transmit and receive data modulated on said second carrier wave (FDM) both in a k-th time slot of consecutive frames of time slots of a TDMA protocol.

10. Mobile station (M1,M2,M3,M4) according to claim 9, characterized in that said frames are arranged in superframes, that said synchronisation information includes a counter tag, and that said mobile station (M1,M2,M3,M4) is adapted to increment said counter tag and to broadcast said synchronisation information modulated on said second carrier frequency (FDM) in said k-th time slot of a j-th time frame of a randomly chosen said superframe if the value of said counter tag does not exceed a predetermined threshold value.
